# EUROPEAN PATENT SPECIFICATION

(11) **EP 0 685 926 B1**
(45) Date of publication and mention of the grant of the patent: **28.04.2004**
(21) Application number: 95202297.8
(22) Date of filing: 16.11.1994
(51) Int. Cl.: H02P 5/402, D06F 33/02

(54) **Method and device for controlling speed of a washing machine motor**
Verfahren und Vorrichtung zum Regeln der Drehzahl eines Waschmaschinenmotors
Procédé et dispositif pour commander la vitesse du moteur d'une machine à laver

(30) Priority: 16.11.1993 KR 9324065; 20.01.1994 KR 9401068; 29.03.1994 KR 9406365; 16.05.1994 KR 9410678; 17.05.1994 KR 9410853
(43) Date of publication of application: 06.12.1995
(62) Divisional of application: 94308465.7
(73) Proprietor: LG ELECTRONICS INC., Seoul (KR)
(72) Inventor: Cheong, Dal Ho, Mapo-Ku, Seoul (KR); Sang, Doo Whan, Socho-Ku, Seoul (KR)
(74) Representative: Cross, Rupert Edward Blount

(56) References cited:
- EP-A- 0 653 832
- DD-A- 301 174
- DE-A- 3 419 408
- JP-A- 61 238 291

## Description

### FIELD OF THE INVENTION

This invention relates to methods and devices for controlling speed of a washing machine motor, more particularly to methods and devices for controlling speed of a washing machine motor by varying number of revolutions and changing direction of rotation of the motor through controlling phase of the motor.

### BACKGROUND OF THE INVENTION

A conventional device for controlling speed of a washing machine motor is to be explained hereinafter, referring to a Low Noise Type(G-Series) motor taken from Matsushita catalogue.

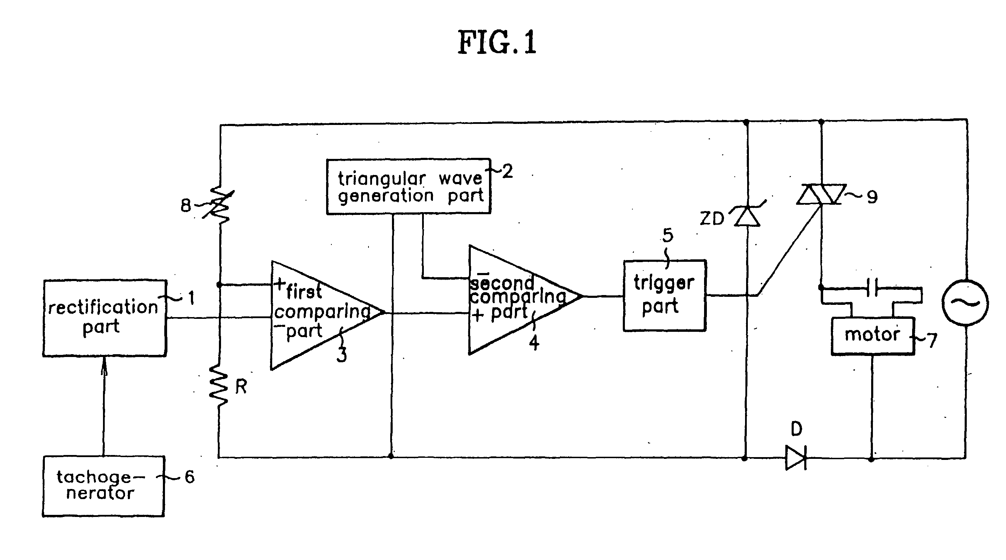

As shown in FIG.1, a conventional device for controlling speed of a washing machine motor includes a tachogenerator 6 for detecting number of revolutions of a washing machine motor 7, a rectification circuit part 1 for converting signals received from the tachogenerator 7 into direct current by rectifying and smoothing the signals, a variable resistor 8 for setting speed of rotation, a first comparing part 3 for comparing signals from the rectification circuit part 1 with signals varied by the variable resistor 8, a triangular wave generation part 2 for generating triangular pulse signals, a second comparing part 4 for comparing the triangular pulse signals received from the triangular wave generation part 2 with the signals received from the first comparing part 3, a trigger part 5 for triggering the signals received from the second comparing part 4 to control operation of the washing machine motor 7, and a triac 9 for turning on/off a driving power to the washing machine motor in response to the control signal of the trigger part 5.

Operation of the foregoing conventional device for controlling speed of a washing machine motor is to be explained hereinafter.

The tachosignal generated at the tachogenerator 6 in sine wave voltage proportional to the number of revolutions of the washing machine motor 7 is applied to the rectification circuit part 1, and rectified into direct current voltage therein. The direct current voltage from the rectification circuit part 1 is applied to the first comparing part 3 to compare with a voltage generated by the variable resistor 8 used for setting speed of rotation, and then applied to the second comparing part 2 to compare with the triangular pulse generated at the triangular wave generation part 2. The signal applied from the second comparing part 4 to the triac 9 through the trigger part 5 triggering a gate of the triac 9 controls phase of an alternative current varying input power to the washing machine motor 7, thereby controls speed of the washing machine motor 7.

However, the conventional device for controlling the speed of a washing machine motor has had problems of complicate and unstable control because, for reversing the motor 7, the motor 7 should be stopped to change over a switch provided outside of the motor 7 for changing winding of the motor 7 due to no built in means for reversing the motor 7 has been provided, and the motor 7 has exhibited great variation in number of revolutions due to low preciseness of the sine wave signal coming from conversion of the sine wave signal applied from the tachogenerator 6 to the rectification part 1 for detecting number of revolutions of the motor 7 into direct current voltage therein.

### SUMMARY OF THE INVENTION

The object of this invention is to provide methods and devices for controlling speed of a washing machine motor which enables to control water current of a washing machine at will by controlling direction of rotation and number of revolutions of the washing machine motor through controlling the phase of the input voltage applied to the washing machine motor.

DD-A-301,174 shows a device for controlling a universal motor particularly in an electric drill. The motor of DD-A-301,174 has a tachometer coil for detecting the speed thereof. A circuit of the device includes a frequency-to-voltage converter for converting the motor speed into a voltage level, a control amplifier for controlling an input voltage in dependence upon a reference voltage level, and a load current variably regulated by a potentiometer. The circuit also contains a torque limiter for providing a torque control signal which controls the motor output torque, and a triac for controlling a voltage supplied to the motor in response to the torque control signal.

According to the present invention there is provided a device for controlling the speed of a washing machine motor, the motor being such that for a motor input voltage V1 and current I1, the motor speed is N1, for a motor input voltage V2 and current I2, the motor speed is N2 and for a motor input voltage V3 and current I3, the motor speed is N3, the motor having speed-torque (S-T) characteristic curves satisfying the requirements N1<N2<N3 and I1<I2<I3 when V1<V2<V3, the device comprising speed detection means for detecting a number of rotations of the washing machine motor; current detection means for detecting the current flowing through the washing machine motor; wave rectification means for rectifying the current received from the current detection means into direct current; microprocessor means for calculating a phase angle (θ) using the direct current received from the wave rectification means and for outputting a proportional integral control signal corresponding to the calculated phase angle, such that the motor can be controlled to operate at a constant speed which is proportional to the load applied; and an input power control means (620) for controlling input power to the washing machine motor under the control of the microprocessor means (600).

### BRIEF DESCRIPTION OF THE DRAWINGS

FIG.1 is a conventional device for controlling speed of a washing machine motor.

FIG.2 is a hardware a method for controlling speed of a washing machine motor in accordance with this invention can be applied thereto.

FIG.3 is a flow chart of a method for controlling speed of a washing machine motor which does not form a part of this invention but which is shown for the purposes of illustration only.

FIG.4 is a detailed flow chart of the step for detecting actual speed of a washing motor shown in FIG.3.

FIG.5 is a detailed flow chart of the steps for the proportional integration compensation value calculation and the angular value calculation shown in FIG.3.

FIG.6 is a device for controlling speed of a washing machine motor. FIG.7 is detail of the motor driving part of FIG.6.

FIG.8 is detail of the phase controller driver of FIG.7.

FIG.9 is detail of the phase controller of FIG.7.

FIG.10 is detail of the synchronization circuit of FIG.6.

FIG.11 is detail of the triangular wave generation part of FIG.6.

FIGs.12(a) to 12(e) and 13(a) to 13(f) show signal wave patterns at various parts of FIG.6.

FIG.14 is another device for controlling speed of a washing machine motor.

FIG.15 is detail of the phase angle detection part of FIG.14.

FIG.16 is yet another device for controlling speed of a washing machine motor.

FIG.17 is a detail circuit diagram of FIG.16.

FIG.18 shows speed-torque characteristic of the washing machine motor in accordance with FIG.16.

FIG.19 is a device for controlling speed of a washing machine motor in accordance with an embodiment of this invention.

FIG.20 is detail of the wave rectification part of FIG.19.

FIG.21 shows signal wave patterns at various parts shown in FIG.20.

FIG.22 shows speed-torque characteristic of the washing machine motor in accordance with FIG.19.

FIG.23 shows wave patterns of voltage and current of the washing machine motor of FIG.19.

### DETAILED DESCRIPTION OF THE INVENTION

Methods for controlling speed of a washing machine motor in accordance with this invention is to be explained hereinafter, referring to the attached drawings.

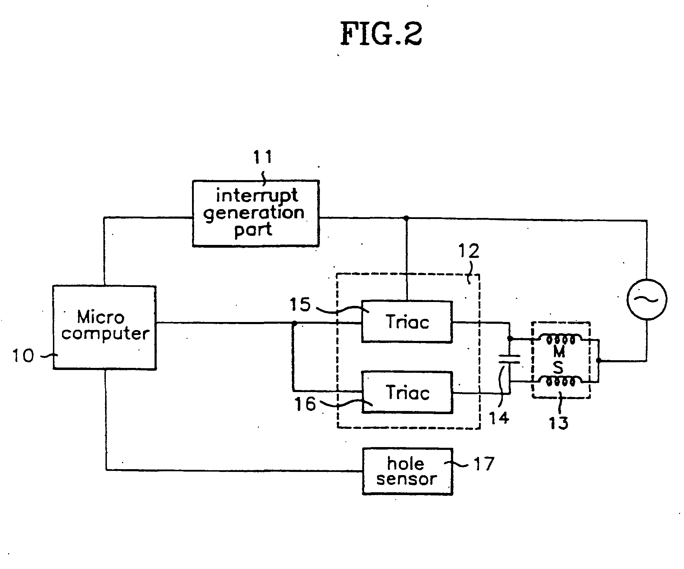

As shown in FIG.2, a hardware used for application of a method for controlling speed of a washing machine motor includes a hole sensor 17 for detecting rotating frequency of a single phase washing machine motor 13, converting the detected rotating frequency into rectangular pulses, and transmitting the rectangular pulses, an interrupt generation part 11 for detecting cycles of ordinary use power frequency and generating an interrupt signal at every half cycle according to the detected the cycle, a microcomputer 10 for calculating speed error a deviation from an ordered speed based on signals received both from the interrupt generation part 11 and the hole sensor 17 and controlling speed of the washing machine motor 13 by generating and applying an error compensation value based on the calculation of the speed error, a triac circuit part 12 having two triacs 15 and 16 for controlling speed of the washing machine motor 13 under the control of the microcomputer 10, and a condenser 14 for converting alternating magnetic fields applied to the washing machine motor 13 into rotating magnetic fields.

Operation of the foregoing hardware used for application of the method for controlling speed of the washing machine motor is to be explained hereinafter.

When the triac 15 is turned on in response to the order speed received from the microcomputer 10, current starts to flow through a main coil M of the washing machine motor 13 and subsequently, lagging current starts to flow through the subcoil S of the washing machine motor 13, resulting to convert the alternating field in the washing machine motor 13 into rotating field, which makes the washing machine motor 13 rotate. When the motor 13 rotates, the hole sensor 17 detects number of revolutions of the washing machine motor 13 and applies the detected number of revolutions to the microcomputer 10 in rectangular pulses.

And from the moment when power is fed to the washing machine motor 13, the interrupt generation part 11 detects cycle(16.6 ms) of the ordinary power frequency(AC;60Hz) and generates interrupt signals at every half cycle(8.3ms) of the detected ordinary power frequency.

Every time the interrupt signal is generated, the microcomputer 10 detects a falling edge of the rectangular pulse received from the hole sensor 17 and calculates actual speed of the washing machine motor 13 by calculating a period of time from a first falling edge to the next falling edge, i.e., a cycle based on the detected falling edges.

Actual speed(Wrm*) of a washing machine motor can be detected by carrying out the foregoing process repeatedly.

By detecting a speed error, deviation from the ordered speed, according to the detected actual speed(Wrm*) of the washing machine motor 13, speed of the washing machine motor 13 can be controlled.

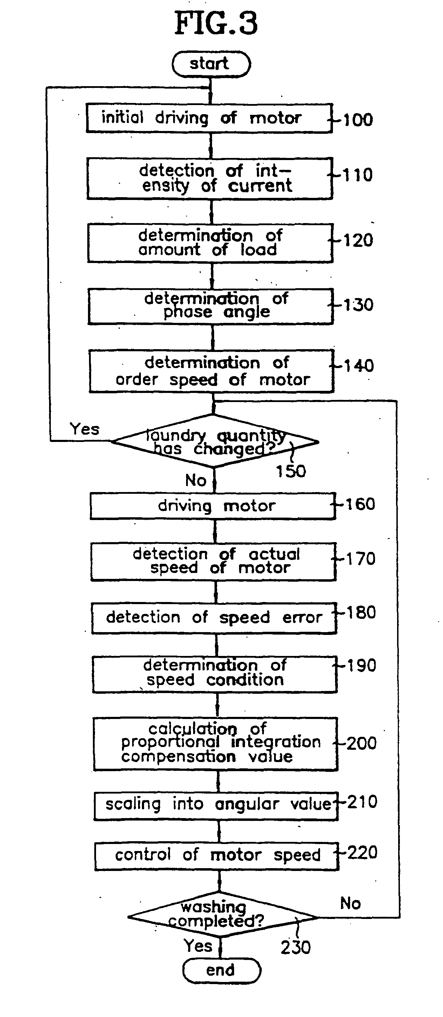

The method for controlling speed of a washing machine motor applicable to the foregoing hardware is to be explained in detail hereinafter, referring to FIGs. 3, 4 and 5. The arrangements of Figures 3 to 5 do not embody the present invention.

First, an order speed determination and driving step of the washing machine motor is carried out for determining the order speed for the washing machine motor based on the quantity of laundry, and driving the washing machine motor based on the determined order speed.

The a order speed determination and driving step of the washing machine motor includes steps of order speed determination of a washing machine motor(100, 110, 120, 130, and 140) for determining the order speed of the washing machine motor according to the quantity of laundry, a laundry quantity change detection(150) for detecting change of laundry quantity, a laundry quantity change reflection for determining the order speed of the washing machine motor again according to the change of laundry quantity by carrying out the speed determination step of the washing machine motor again in case the laundry quantity found changed as the result of the carried out laundry quantity change detection step (150), and a washing machine motor driving (160) for driving the washing machine motor at the order speed of the washing machine motor in case the laundry quantity found not changed as the result of the carried out laundry quantity change detection step(150).

Herein, the order speed determination step of the washing machine motor determines the order speed of the washing machine motor through initial driving(100) of the washing machine motor for a short while for detecting laundry quantity, detecting current intensity(110) flowing through the washing machine motor at carrying out the initial driving step(100) of the washing machine motor, determining amount of load(120) by determining the laundry quantity with a ratio of current intensity at 100% load to the detected current intensity referring to a speed-torque characteristic curve of the washing machine motor, determining phase angle(130) of the washing machine motor by applying phase angle pattern based on the determined amount of load, and determining the order speed (140) of the washing machine motor based on the determined phase angle.

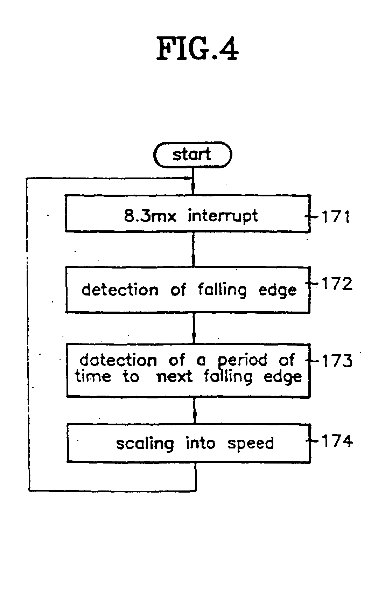

After carrying out the order speed determination and driving step of the washing machine motor, the actual speed detection step(170) for detecting actual speed of the washing machine motor at every half cycle of the ordinary use power frequency is carried out, which is to be explained hereinafter, referring to FIG.4.

The actual speed detection step(170) includes an interrupt input step(171) for receiving interrupts generated corresponding to every half cycle of ordinary use power frequency, a falling edge detection step(172) for detecting falling edges of rectangular pulses corresponding to the rotation of the washing machine motor from the received interrupt, a rectangular pulse cycle detection step(173) for detecting one cycle of the rectangular pulses by detecting a period of time taken from the detected falling edge to the next falling edge, and actual speed detection step(174) for scaling actual speed of the washing machine motor from the detected cycle of rectangular pulse.

Herein, since the cycle of ordinary use power frequency (AC;60Hz) is 16.6ms, the interrupt generates at every 8.3ms.

After carrying out actual speed detection step(170), the speed error detection step(180) is carried out for detecting speed error by comparing the detected actual speed with the order speed, wherein the speed error is deviation of the actual speed from the order speed.

After carrying out the speed error detection step(180), the speed condition determination step(190) is carried out for determining condition of the speed based on the detected speed error, wherein if the speed error is greater than a preset allowance, it is determined to be overspeed, if the speed error is smaller than the allowance, it is determined to be underspeed, and if the speed error is within the allowance, it is determined to be normal.

After carrying out the speed condition determination step(190), the proportional integration compensation value calculation step(200) is carried out for calculating a proportional integration compensation value according to the speed condition.

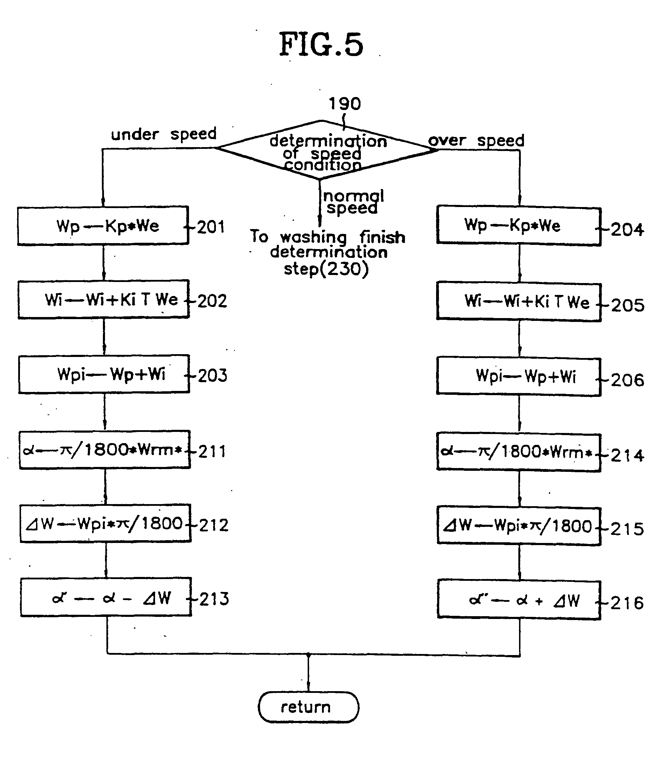

The proportional integration compensation value calculation step(200) includes, as shown in FIG.5, a underspeed proportional integration compensation value calculation step(201, 202 and 203) for calculating underspeed proportional integration compensation value in case it is found to be underspeed as the result of the carried out speed condition determination step(190), and an overspeed proportional integration compensation value calculation step(204, 205 and 206) for calculating overspeed proportional integration compensation value in case it is found to be overspeed as the result of the carried out speed condition determination step(190), which is to be explained hereinafter in detail.

First, the underspeed proportional integration compensation value calculation step includes calculation of a proportional compensation value Wp by multiplying a proportional gain constant Kp and the detected speed error We (201), calculation of an integration compensation value Wi by multiplying an integration gain constant Ki, a loop time T and the speed error We and adding the above multiplied value to an initial integration value Wi (202), and calculation of a proportional integration compensation value Wpi by adding the calculated proportional compensation value Wp to the calculated integration compensation value Wi (203).

And the overspeed proportional integration compensation value calculation step is carried out in a way similar to the underspeed proportional integration compensation value calculation step. That is, the overspeed proportional integration compensation value calculation step includes calculation of a proportional compensation value Wp by multiplying a proportional gain constant Kp and the detected speed error We (204), calculation of an integration compensation value Wi by multiplying an integration gain constant Ki, a loop time T and the speed error We and adding the above multiplied value to an initial integration value Wi (205), and calculation of a proportional integration compensation value Wpi by adding the calculated proportional compensation value Wp to the calculated integration compensation value Wi (206).

Herein, the initial integration value Wi is "0", and the value thereafter is an accumulation therefrom.

After carrying out the proportional integration compensation value calculation step (200), an angular value scaling step (210) is carried out for scaling the calculated proportional integration compensation value into an angular value.

As shown in FIG.5, the angular value scaling step (210) includes underspeed angular value calculation step (211, 212 and 213) for scaling the underspeed proportional integration compensation value into angular value after carrying out the underspeed proportional integration compensation value calculation step, and the overspeed angular value calculation step (214, 215 and 216) for scaling the calculated overspeed proportional integration compensation value into angular value after carrying out the overspeed proportional integration compensation value calculation step (204, 205 and 206), which is explained hereinafter in detail.

First, the underspeed angular value calculation step includes scaling the order speed Wrm* into a first angular value a by multiplying the order speed Wrm* and π/180 (211), scaling the underspeed proportional integration compensation value Wpi into a second angular value ΔW by multiplying the underspeed proportional integration compensation value Wpi and π/180 (212), and calculating a underspeed angular value α' by subtracting the second angular value ΔW from the first angular value α (213).

And the overspeed angular value calculation step includes scaling the order speed Wrm* into a first angular value α by multiplying the order speed Wrm* and π/180 (214), scaling the overspeed proportional integration compensation value Wpi into a second angular value ΔW by multiplying the overspeed proportional integration compensation value Wpi and π/180 (215), and calculating a overspeed angular value α" by adding the first angular value α and the second angular value ΔW (216).

In this instant, if the underspeed angular value α' is smaller than 0 or greater than π and the overspeed angular value α'' is smaller than 0 or greater than π, determining that the speed is normal, process proceeds to a step for determining finishing of washing (230) is carried out, which is to be explained hereinafter.

After carrying out angular value scaling step (210), a speed control step (220) of the washing machine motor is carried out for controlling the speed of the washing machine motor. That is, since the washing machine motor is turned on at angular value "0", and stopped at angular value π after turning 180 degrees, control of the washing machine motor using angular value is possible.

After finishing the speed control step (220) of the washing machine motor, proceeding to a step for determining on finishing of washing, if it is found that the washing has not been completed, proceeding to the laundry quantity change detection step (150), the processes are repeated, and if it is found that the washing has been completed, the washing is finished.

Comprisal and operation of a device for controlling speed of a washing machine motor is to be explained hereinafter, referring to the attached drawings.

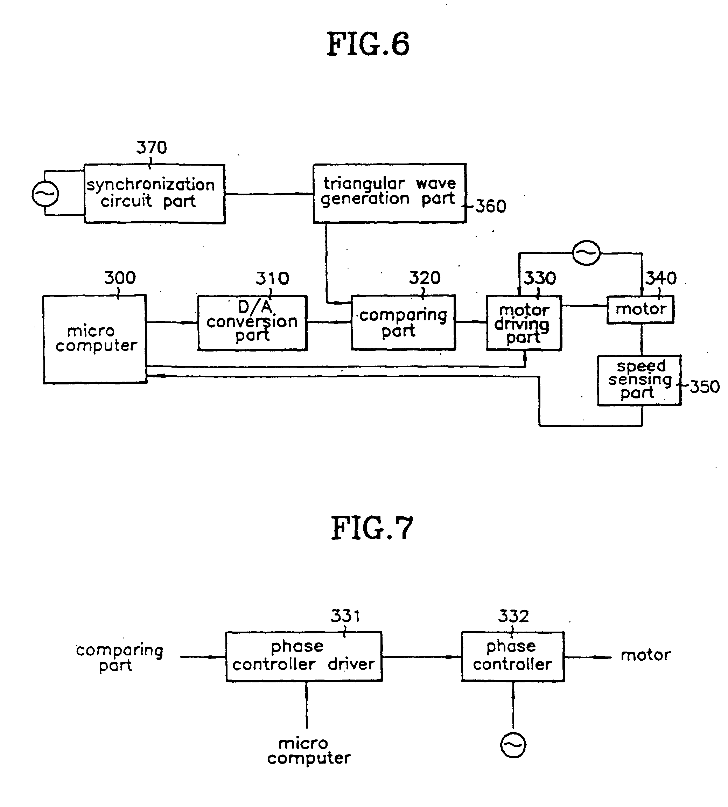

As shown in FIG.6, a device for controlling speed of a washing machine motor includes a microcomputer 300, a D/A conversion part 310, a comparing part 320, a motor driving part 330, a speed sensing part 350, a triangular wave generation part 360 and a synchronization circuit part 370. Figure 6 again does not embody the present invention.

The speed sensing part 350, sensing number of revolutions of the washing machine motor 340, applies it to the microcomputer 300, and the microcomputer 300 generates order signals for controlling speed of rotation, direction of rotation and stoppage of the washing machine motor 340 according to the number of revolutions of the washing machine motor received from the speed sensing part 350.

The D/A conversion part 310 converts the order signals for controlling the number of revolutions of the washing machine motor 340 received from the microcomputer 300 into analogue signals, and the triangular wave generation part 360, synchronizing to the zero crossing point of alternative current voltage, generates triangular pulses.

The comparing part 320, comparing signals received from the D/A conversion part 310 and the triangular wave generation part 360, generates trigger pulses, and the motor driving part 330 feeds alternative current to the washing machine motor 340 for driving the washing machine motor 340 in response to the order signals for controlling direction of rotation and stoppage of the washing machine motor 340 received from the microcomputer 300 and signals received from the comparing part 320.

The synchronization circuit part 370, generating synchronizing signals for synchronizing to zero crossing point of an alternative current voltage applied to the washing machine motor 340, applies the synchronizing signals to the triangular wave generation part 360.

Detail of the comprisal of the device for controlling speed of the washing machine motor is to be described hereinafter with reference to Figures 7 to 11, which once more are shown for illustrative purposes only and do not embody the present invention.

As shown in FIG.7, the motor driving part 330 includes a phase controller 332 for controlling phase of the alternative current of the washing machine motor 340, and a phase controller driver 331 for driving and controlling the phase controller 332 in response to the order signals for controlling direction of rotation and stoppage of the washing machine motor 340 received from the microcomputer 300 and trigger pulses received from the comparing part 320.

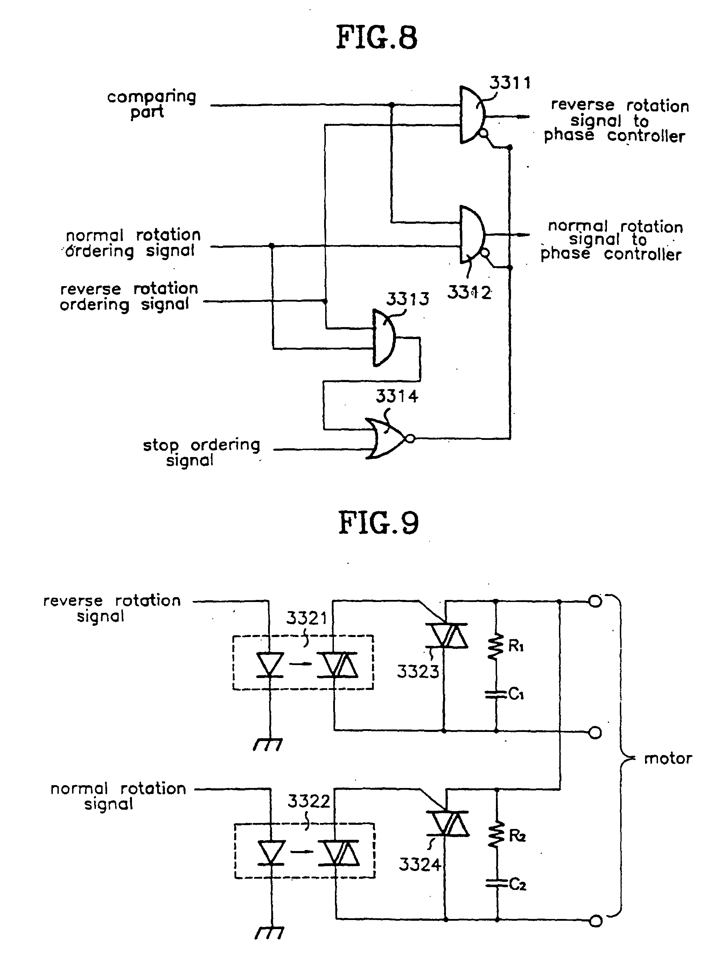

As shown in FIG. 8, the phase controller driver 331 includes a first AND gate 3311 for logic multiplying the trigger pulse received from the comparing part 320 and the reverse rotation order signal received from the microcomputer 300 for generating reverse rotation signal for the phase controller 332, a second AND gate 3312 for logic multiplying the trigger pulse received from the comparing part 320 and the normal rotation order signal received from the microcomputer 300 for generating normal rotation signal for the phase controller 332, a third AND gate 3313 for logic multiplying the reverse rotation order signal and the normal rotation order signal received from the microcomputer 300, and a NOR gate 3314 for NOR operation of the stop order signal received from the third AND gate 3313 and the microcomputer 300 for generating an enable signal controlling operation of the first and the second AND gates 3311 and 3312.

As shown in FIG.9, the phase controller 3312 includes a first photocoupler 3321 for separating the reverse rotation signal into alternative current and control signal and transmitting them, and a second photocoupler 3322 for separating the normal rotation signal into alternative current and control signal and transmitting them, a first triac 3323 for applying alternative current to the washing machine motor 340 in response to the signal received from the first photocoupler 3321, a resistor R1 and a capacitor C1 connected in series to both ends of the first triac 3323, a second triac 3324 for applying alternative current to the washing machine motor 340 in response to the signal received from the second photocoupler 3322, and a resistor R2 and a capacitor C2 connected in series to both ends of the second triac 3324.

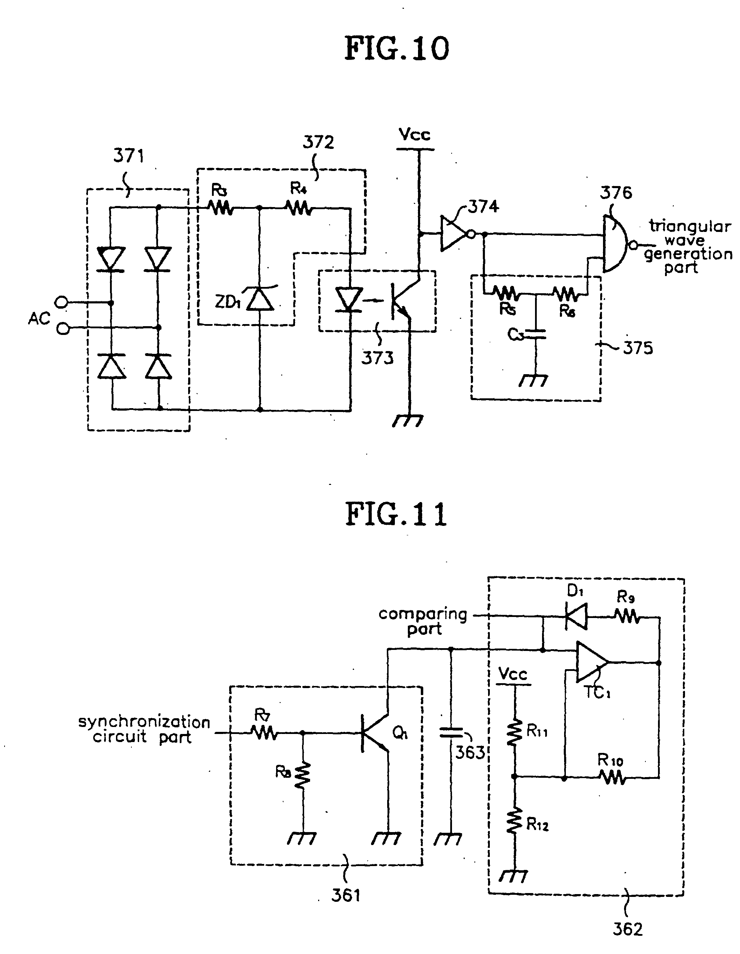

As shown in FIG.10, the synchronization circuit part 370 includes a rectification part 371 having bridge diodes for rectifying alternative current applied thereto, a clamping part 372 having resistors R3 and R4 connected in series to the rectification part 371 and a zener diode ZD1 with a cathode thereon connected to the resistors R3 and R4 in parallel and an anode thereon connected to the other end of the rectification part 371 for clamping the rectified voltage received from the rectification part 371, a photocoupler 373 for separating the signal received from the clamping part 371 into alternative current and control signal and inverting the separated control signal, and an NOT gate 374 for inverting the signal received from the photocoupler 373, a delay part 375 having resistors R5 and R6 connected to the NOT gate 374 in series and a capacitor C3 with one end thereon connected to the resistors R5 and R6 in parallel and the other end thereon grounded for delaying the signal received from the NOT gate 374, and an NAND gate 376 for NAND operation of the signals received from the NOT gate 374 and the delay part 375.

As shown in FIG.11, the triangular wave generation part 360 includes a capacitor 363 for generating triangular pulses by charging and discharging, a discharge part 361 having a transistor Q1 with a collector thereon connected to the capacitor 363 for discharging the capacitor 363 in response to the synchronization signals received from the synchronization part 370, and a charge part 362 having a diode D1 with a cathode thereon connected to an input terminal of the comparing part 320 and a differential amplifier IC1 having input terminals thereon connected the cathode of the diode D1 and a power source Vcc respectively and an output terminal thereon connected to the anode of the diode D1 for charging the capacitor 362 depending on the voltage of the power source Vcc.

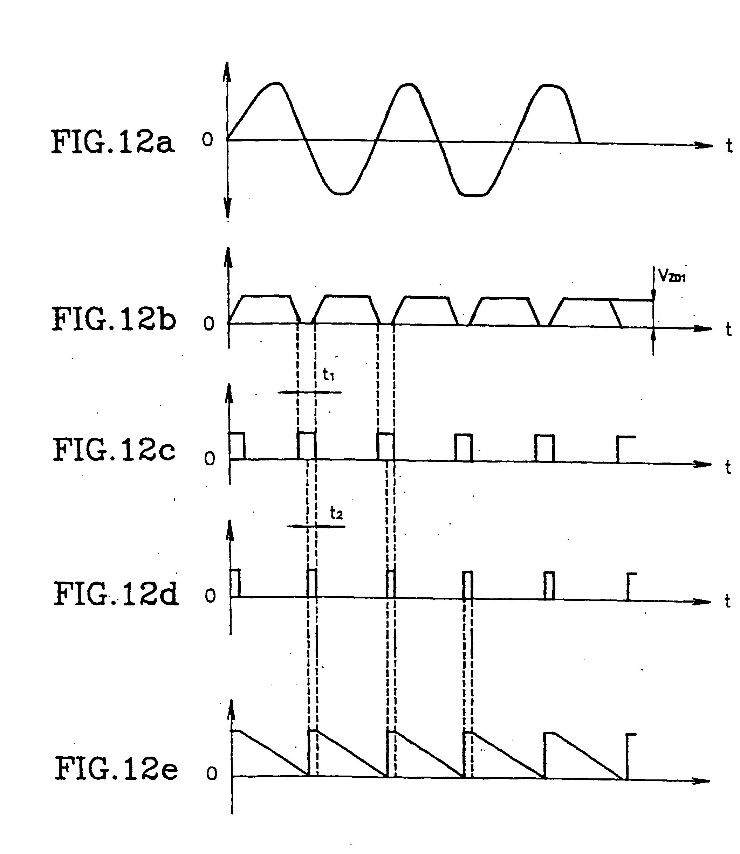

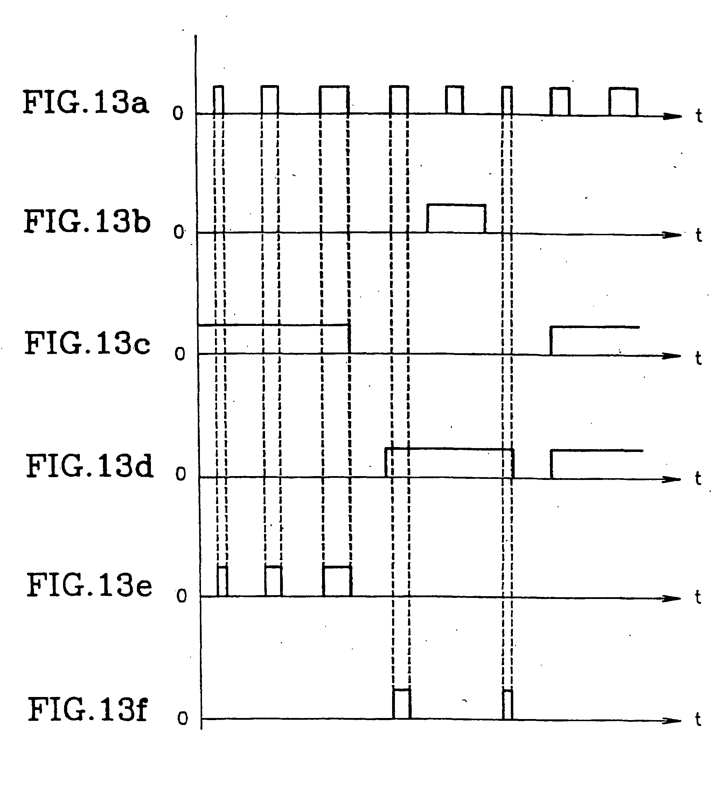

Operation of the device for controlling speed of a washing machine motor having the foregoing comprisal is to be explained hereinafter, referring to FIGs. 12(a) to 12(e) and 13(a) to 13(f) which do not embody the present invention.

In case the wave pattern of alternative current power applied to the washing machine motor 340 is as shown in FIG.12(a), the signal wave pattern rectified and clamped through the rectification part 371 and the clamping part 372 of the synchronization part 370 is as shown in FIG.12(b), the signal wave pattern inverted through the photocoupler 373 is as shown in FIG.12(c), and the signal wave pattern received from the delay part 375 and the NAND gate 376 and synchronized to the zero crossing point of the alternative current is as shown in FIG.12(d).

The signal received from the synchronization circuit part 370 (FIG.12(d) is converted into triangular pulses at the triangular wave generation part 360 as shown in FIG. 12(e).

On the other hand, the speed sensing part 350 senses speed of the washing machine motor 340 applies the sensed speed to the microcomputer 300, the microcomputer 300 issues orders on the number of revolutions and the direction of rotation for controlling the washing machine motor 340, and the order signal for controlling the number of revolutions of the washing machine motor 340 of the order signals received from the microcomputer 300 is,converted into digital signal at the D/A conversion part 310 and applied to a (-)input terminal of the comparing part 320.

The comparing part 320 compares the triangular pulses (FIG.(e)) received from the triangular wave generation part 360 with the signal received from the D/A conversion part 310 to generate trigger pulses as shown in FIG.13(a).

The trigger pulses (FIG.13(a)) received from the comparing part 320 together with the order signals for stop, normal rotation and reverse rotation received from the microcomputer 300 are processed at the phase controller driver 331 to generate signal controlling the phase controller 332.

That is, only in case the trigger pulse(FIG.13(a)) received from the comparing part 320 and the normal rotation order signal (FIG.13(c)) received from the microcomputer 300 through the D/A conversion part 310 are at high level on the same time, the normal rotation order signal as shown in FIG 13(e) is applied to the phase controller 332, only in case the trigger pulse (FIG.13(a)) received from the comparing part 320 and the reverse rotation order signal (FIG.13(d)) received from the microcomputer 300 through the D/A conversion part 310 are at high level on the same time, the reverse rotation order signal as shown in FIG.13(f) is applied to the phase controller 332, and in case either the stop order signal (FIG.13(b)) is received from the microcomputer 300 through the D/A conversion part 310 or the normal rotation order signal together with the reverse rotation order signal are received on the same time, neither normal rotation signal nor reverse rotation signal are issued either from the third AND gate 3313 or from the NOR gate 3314.

As has been explained, since, when the phase controller driver 3314 generates a reverse rotation signal or a normal rotation signal, the first photocoupler 3321 or the second photocoupler 3322 of the phase controller 332 makes the first triac 3321 or the second triac 3322 conductive to rotate the washing machine motor 340 in reverse or normal direction, and the speed can vary according to the level of the order signal issued from the microcomputer 300, the water current can be controlled at will.

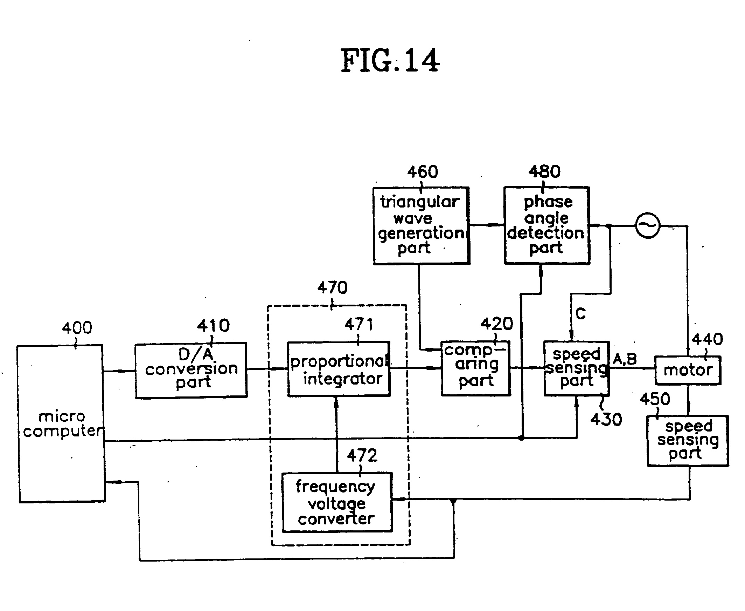

As shown in FIG. 14, a further device for controlling speed of a washing machine motor includes a microcomputer 400, a D/A conversion part 410, a proportional integration part 470, a comparing part 420, a triangular wave generation part 460, a phase angle detection part 480, a motor driving part 430, and a speed sensing part 450. Again, this is not representative of the present invention.

The phase angle detection part 480 detects phase angle using the alternative current fed from the motor driving part 430 to the washing machine motor 440 and the order signal controlling the direction of rotation of the washing machine motor 440 received from the microcomputer 400, and applies the detected phase angle to the triangular wave generation part 460 to generate triangular pulses according to the detected phase angle.

The proportional integration part 470 includes a frequency/voltage converter 472 for converting the number of revolutions of the washing machine motor 440 received from the speed sensing part 450 into voltage, and a proportional integrator 471 for proportional integration of the signal received from the frequency/voltage converter 472 and the signal received from the D/A conversion part 410 to generate a speed error signal, thereby applies the speed error signals calculated through proportional integration based on the number of revolutions of the washing machine motor 440 received from the speed sensing part 450 and the signal received from the D/A conversion part 410 to the comparing part 420.

The comparing part 420 compares the signals received from the proportional integration part 470 and the triangular wave generation part 460 to generate trigger pulses, and the triangular wave generation part 460 generates triangular pulses according to the phase angle received from the phase angle detection part 480.

The microcomputer 400, the D/A conversion part 410, the motor driving part 430, and the speed sensing part 450 serves the same with those for the device for controlling speed of washing machine motor in accordance with one embodiment this invention.

Herein, the speed sensing part 450, consisting of hole sensors mostly, senses the number of revolutions and direction of rotation of the washing machine motor 440 and applies them to the microcomputer 400 to control speed of the washing machine motor 400.

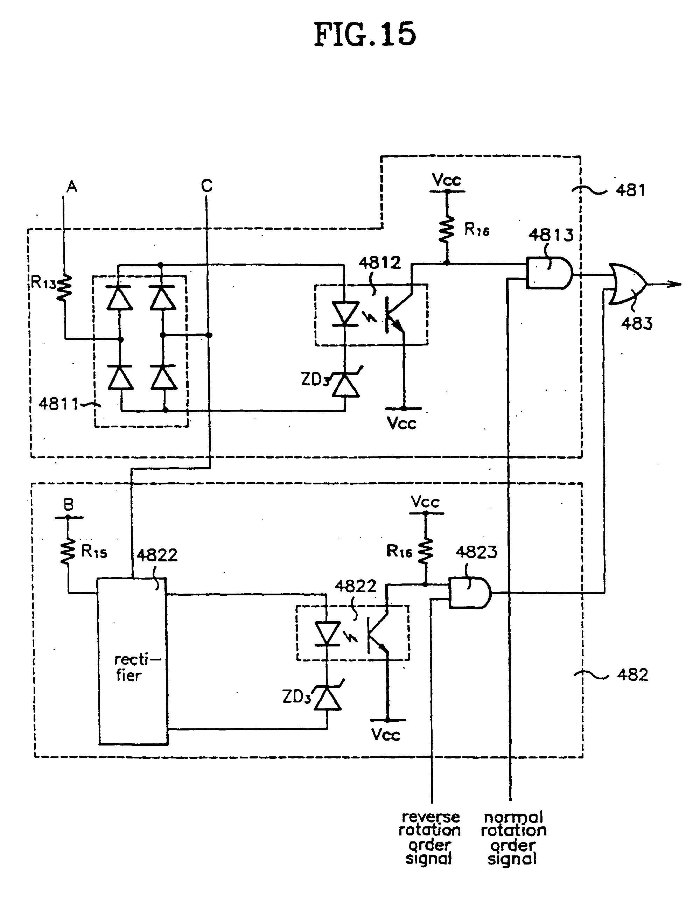

As shown in FIG.15, the phase angle detection part 480 includes a first phase angle detector 481 for detecting phase angle of the alternative current received from the motor driving part 430 in response to the order signal for normal rotation received from the microcomputer 400, a second phase angle detector 482 for detecting phase angle of the alternative current received from the motor driving part 430 in response to the order signal for reverse rotation received . from the microcomputer 400, and an OR gate 483 for logical summation of the signals received from the first and the second phase angle detectors 481 and 482 and applying the logic sum to the triangular wave generation part 460.

The first phase angle detector 481 includes a rectifier 4811 having bridge diodes for rectifying the alternative current fed from the motor driving part 430 to the washing machine motor 340, a photocoupler 4811 made conductive in response to the rectified current received from the rectifier 4811, and an AND gate 4813 for logic multiplying the signal received from the photocoupler 4812 and the order signal for normal rotation received from the microcomputer 400 and applying the logic multiplied signal to the OR gate 483.

The second phase angle detector 482 includes a rectifier 4821 having bridge diodes for rectifying the alternative current fed from the motor driving part 430 to the washing machine motor 340, a photocoupler 4822 made conductive in response to the rectified current received from the rectifier 4821, and an AND gate 4823 for logic multiplying the signal received from the photocoupler 4822 and the order signal for normal rotation received from the microcomputer 400 and applying the logic multiplied signal to the OR gate 483.

Operation of the foregoing device for controlling speed of a washing machine motor is to be explained hereinafter.

The order signal for controlling speed of the washing machine motor 440 received from the microcomputer 400 is converted into digital signal at the D/A conversion part 410 and applied to the proportional integration part 471. And the speed of the washing machine motor 440 sensed at the speed sensing part 450 is converted into frequency signal which is converted again into voltage at the frequency/voltage conversion part 472 and applied to the proportional integrator 471.

Signals received from both the frequency/voltage conversion part 472 and the D/A conversion part 410 are proportionally integrated to an error signal corresponding to error at the proportional integrator 471 proportional to a proportional constant and an integration constant.

And the phase angle detection part 480 detects phase angle using the alternative current fed from the motor driving part 430 to the washing machine motor 440 and the order signal for controlling the direction of rotation of the washing machine motor 440 received from the microcomputer 400, and the triangular wave generation part 460 generate triangular pulses according to the phase angle received from the phase angle detection part 480.

Error signal applied from the proportional integration part 471 to the comparing part 420 is compared with triangular pulse generated in the triangular wave generation part 460 and applied to the motor driving part 430, and the motor driving part 430 drives the washing machine motor 440 rotating in normal and reverse direction in response to the signal received from the comparing part 420.

That is, since signal received from the comparing part 420 becomes a signal for controlling the timing of power feed as the result of comparison of the error between the order speed signal of the microcomputer 400 and the actual speed of the washing machine motor 440 with the triangular pulse corresponding to the phase angle of the power fed to the washing machine motor 440, making the motor driving part 430 to feed power to the washing machine motor 440 to enable to control a phase power, the washing machine motor can be driven at a desired speed.

Speed of the washing machine motor 440 driven as the foregoing operational process is, detected and converted into frequency signal proportional to the number of revolutions at the speed sensing part 450, and fed back to the microcomputer 400.

The microcomputer 400 compares the fed back frequency signal corresponding to the speed of the washing machine motor 440 with a preset order speed and applies a speed order signal corresponding to the difference of the compared speed to the D/A conversion part 410 to control the washing machine motor 440 to operate at the preset order speed through the foregoing process.

And the frequency applied from the speed sensing part 450 to the frequency/voltage conversion part 472 is converted to a voltage corresponding to the frequency, and applied to the proportional integration part 471 to generate a new error signal corresponding to the error.

And the phase angle detection part 480 detects phase angle according to the alternative current fed from the motor driving part 430 to the washing machine motor 440 and the order signal for controlling the direction of rotation of the washing machine motor 440 received from the microcomputer 400, and applies the detected phase angle to the triangular wave generation part 460 to enable to generate triangular pulses according to the detected phase angle.

The new error signal received from the proportional integrator 471 is compared with the triangular pulse received from the triangular wave generation part 460 through the comparing part 420 to enable the motor driving part 430 to control the washing machine motor 450.

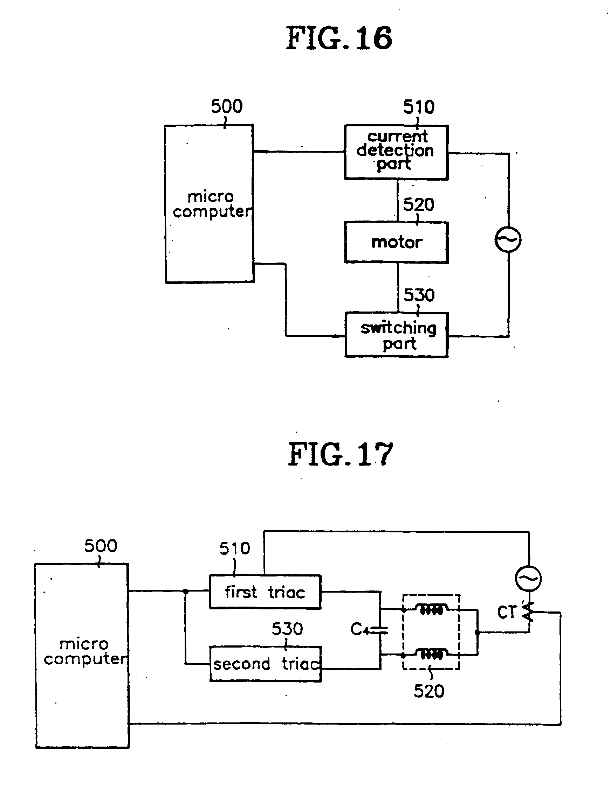

As shown in FIGs. 16 and 17, yet a further device for controlling speed of a washing machine motor includes a microcomputer 500, a current detection part 510, and a switching part 530, thereby, through determining amount of load based on a speed-torque characteristic curve of the washing machine motor at sensing the laundry quantity and estimating speed of the washing machine motor by referring to a data on driving speed of the washing machine motor generated in the microcomputer, the speed of the washing machine motor can be controlled conveniently. Once more, the arrangements of Figures 16 and 17 do not embody the present invention but are shown for illustrative purposes only.

The current detection part 510 having a transformer CT connected to an alternative current input terminal of the washing machine motor 520 for sensing intensity of current flowing into the washing machine motor 520 detects intensity of current flowing through the washing machine motor 520.

The microcomputer 500 that determines the driving speed of the washing machine motor 520 by detecting laundry quantity from a speed-torque characteristic curve of the washing machine motor 520 based on the intensity of current received from the current detection part 510 and controls operation of the washing machine motor 520, stores data on amount of load and driving speed of the washing machine motor 520 generated in the microcomputer 500.

As shown in FIG.17, the switching part 530 having a first and a second triacs 531 and 532 for controlling operation of the washing machine motor by turning on/off in response to the signal received from the microcomputer 500 controls operation of the washing machine motor 520 under the control of the microcomputer 500.

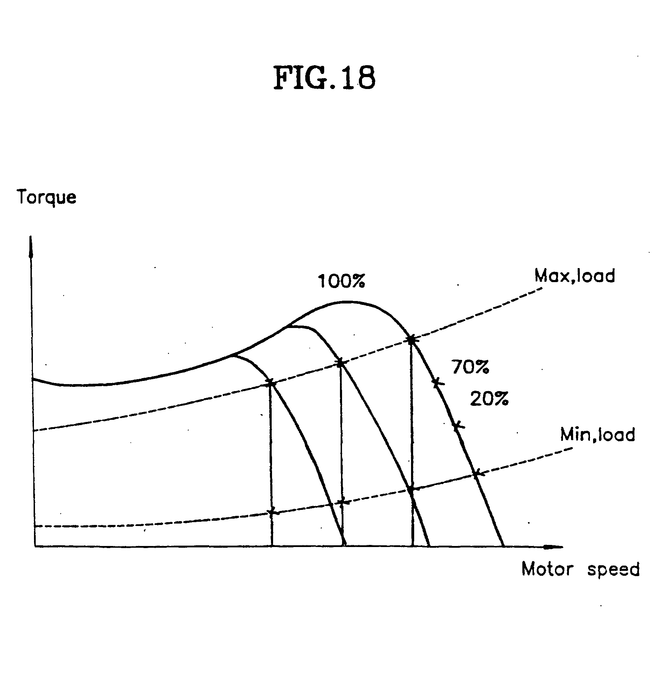

Operation of the device for controlling speed of the washing machine motor having the foregoing comprisal is to be explained hereinafter, referring to FIG.18.

First, since the maximum capacity of a washing machine will be fixed at least by the time of shipment, if intensity of current has been calculated based on amount of load at the maximum capacity as well as various working condition, the present speed of the washing machine motor can be detected.

In other words, at the time of shipment of the products, if speed-torque curves of a motor based on various loads have been prepared, connecting the outermost contours for various loads, these outermost contours represent the very curves when the maximum voltage is applied to washing machine motor 520, and accordingly, since load curves of 10% to 100% of the load of a washing machine can be obtained from the speed-torque characteristic curves, current intensities corresponding to these loads can be obtained. Therefore, by sensing loads at initial operation of the washing machine and based on the load curve about the loads, a phase angle, i.e., a speed of the washing machine motor can be determined.

That is, if a load based on a laundry quantity is 10% of the maximum load, by comparing a required intensity of current at the present speed taken along the 10% load curve of the speed-torque characteristic curve with the present intensity of current applied from the current sensing part 510, it is possible to determine the present required speed of the washing machine motor 520 to control the speed of the washing machine motor 520.

In other words, by sensing laundry quantity using the microcomputer 500 and detecting a load about the sensed laundry quantity, speed of the washing machine motor 520 can be determined.

And in the foregoing process, when the speed of the washing machine motor 520 is determined, the transformer CT in the current detection part 510 can detect the intensity of current flowing through the washing machine motor 520 which current intensity is applied to the microcomputer 500 at an A/D conversion input terminal thereon to determine the present speed of the washing machine motor 520 through compensation for error with proportional integration control and comparison with data already stored therein.

That is, since speed of the washing machine motor 520 can be controlled without any separate additional device for detecting speed of the washing machine motor 520 by comparing the speed of the washing machine motor 520 determined based on laundry quantity with the speed of the washing machine motor 520 at the present time and controlling the first and the second triacs 531 and 532 in the switching part 530 based on the comparison of the speeds.

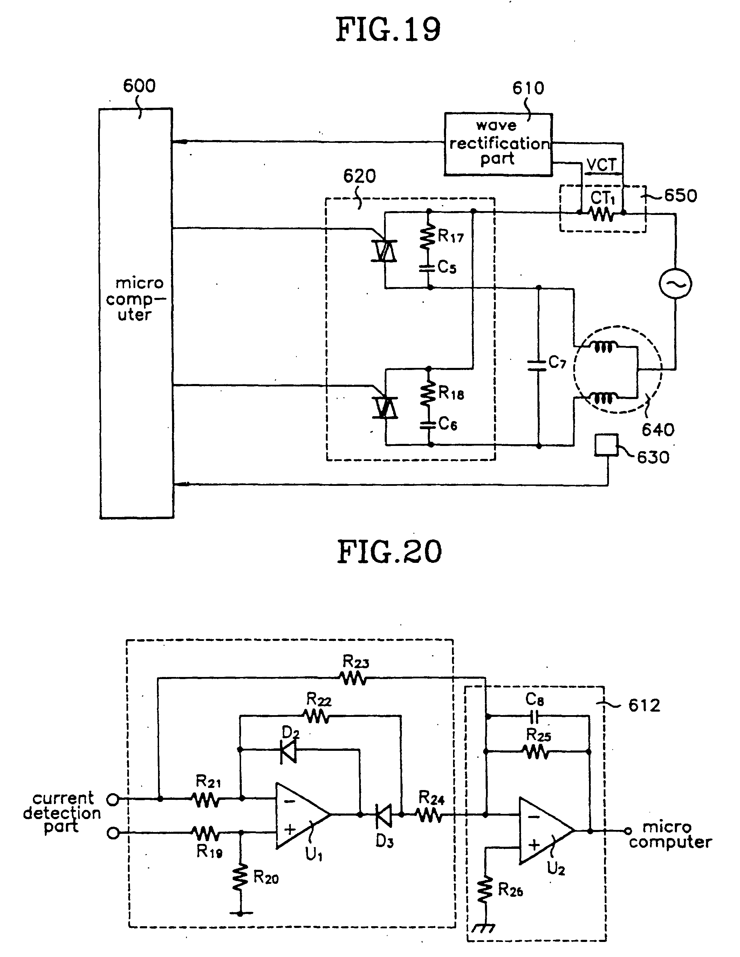

As shown in FIG.19, a device for controlling speed of a washing machine motor in accordance with an embodiment of this invention includes a microcomputer 600, a wave rectification part 610, an input power control part 620, a speed detection part 630 and a current detection part 650, thereby can maintain the washing machine motor at a constant speed by compensating for the variation of speed of the washing machine motor following input power change caused in case speed of the washing machine motor is changed through phase control.

The speed detection part 630 detects speed of the washing machine motor 640, and the current detection part 650 detects intensity of current flowing through the washing machine motor 640.

As shown in FIG.20, the wave rectification part 610 includes a first amplification part 611 receiving signals from the current detection part 610 as inverted and non-inverted inputs respectively, and a second amplification part 612 receiving signal from the first amplification part 611 as an inverted input, thereby rectifies the current received from the current detection part 650 into direct current.

The first amplification part 611 includes a differential amplifier U1 having a (-) input terminal thereon receiving one signal from the current detection part 650 through a resistor R21 and a (+) input terminal thereon receiving another signal from the current detection part 650 through a resistor R19 connected in parallel to a resistor R20 with one end thereon grounded, a diode D13 having a cathode thereon connected to an output terminal of the differential amplifier U1 and an anode thereon connected to the (-) input terminal of the differential amplifier U1 through a resistor R22, a resistor R24 connected to the anode of the diode D3, a resistor R23 having ends thereon connected to the resistor R24 and the resistor R21 respectively, and a diode D2 having an anode thereon connected to the output terminal of the differential amplifier U1 and a cathode thereon connected to the (-) input terminal of the differential amplifier U1.

The second amplifier 612 includes a resistor R26 having one end thereon grounded, a differential amplifier U2 having a (+) input terminal thereon connected to the other end of the resistor R26 and a (-) input terminal thereon connected to the resistor R24 of the first amplification part 611, and a resistor R25 and capacitor C8 having two ends thereon connected to the output terminal and the (-) input terminal of the differential amplifier U2 respectively in parallel.

The microcomputer 600 controls speed of the washing machine motor 640 in response to the signal received from the speed detection part 630 and the direct current received from the wave rectification part 610, and the input power control part 620 controls input power to the washing machine motor 640 under the control of the microcomputer 600.

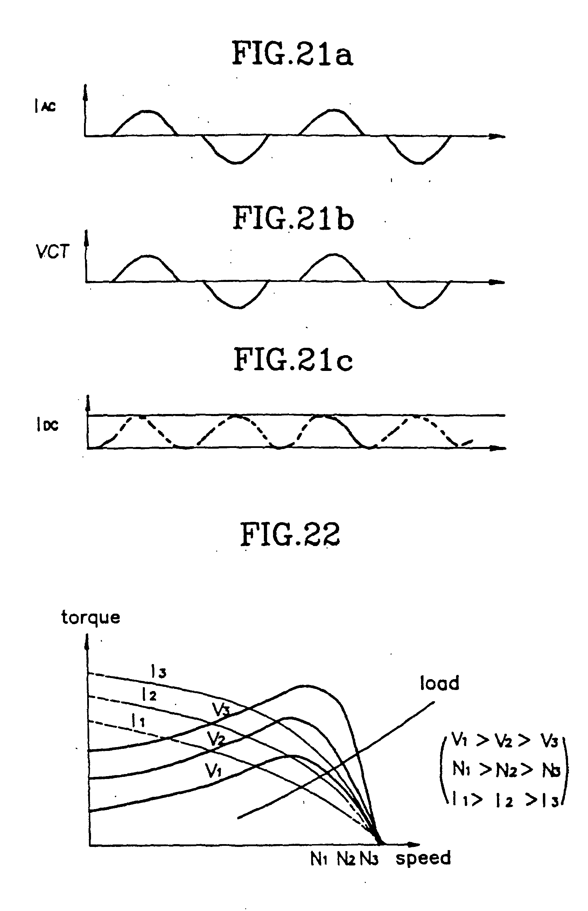

Operation of the device for controlling speed of a washing machine motor having the foregoing comprisal in accordance with the embodiment of this invention is to be explained hereinafter, referring to FIGs. 21(a) to 21(c), 22, and 23(a) and 23(b).

In case the current flowing through both ends of the current detection part 650 is as shown in FIG.21(a), the wave pattern converted into voltage at the current detection part 650 is as shown in FIG.21(b), which signal is applied to the wave rectification part 610 to rectify the signal into direct current voltage. In this instant, in case the signal received from the current detection part 650 is (-), the diode D2 is operated, and in case the signal received from the current detection part 650 is (+), the diode D3 is operated, resulting to have the wave rectification part 610 to generate a wave pattern smoothened as shown in FIG.21(c).

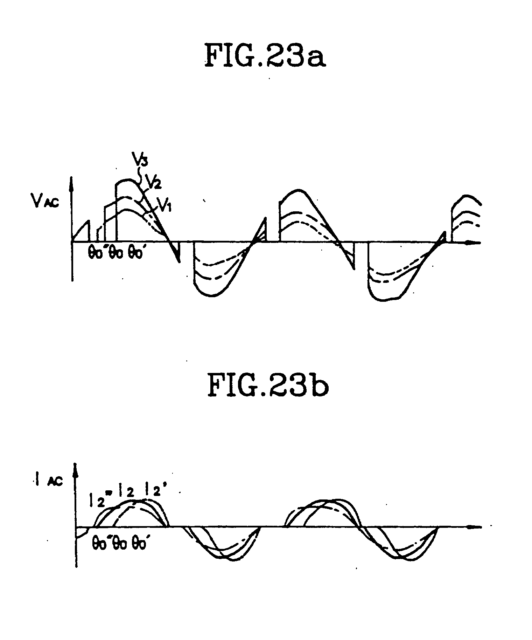

In case load of the device for controlling speed of a washing machine motor in accordance with further embodiment of this invention exhibits a load curve as shown in FIG.22, when the input voltage would be changed from V2 to V3 the speed also would be changed from N2 to N3. Such a change of speed according to the change of voltage which is a utilization of a characteristic of current change from current I2 to current I3 in the characteristic curves of the washing machine motor 640, can be achieved by the microcomputer 600 calculating the phase angle θ based on the increment of change of the current detected at the microcomputer 600 through the current rectification part 610. According to this, the washing machine motor 640 can be maintained at a constant speed, and come to have voltage and current patterns as shown in FIGs.23(a) and 23(b), respectively.

As has been explained, this invention has advantages of facilitating convenient control of water current of a washing machine by controlling the direction of rotation and the number of revolutions of a washing machine motor through controlling the phase of input voltage applied to the washing machine motor, and improving quality and reliability of motors used in home electric appliances through precise speed control of the motors by applying this invention to refrigerators and air conditioners as well.

## Claims

1. A device for controlling the speed of a washing machine motor, the motor being such that for a motor input voltage V1 and current I1, the motor speed is N1, for a motor input voltage V2 and current I2, the motor speed is N2 and for a motor input voltage V3 and current I3, the motor speed is N3, the motor having speed-torque (S-T) characteristic curves satisfying the requirements N1<N2<N3 and I1<I2<I3 when V1<V2<V3, the device comprising
speed detection means (630) for detecting a number of rotations of the washing machine motor (640);
current detection means (650) for detecting the current flowing through the washing machine motor (640);
wave rectification means (610) for rectifying the current received from the current detection means (650) into direct current;
microprocessor means (600) for calculating a phase angle (θ) using the direct current received from the wave rectification means (610) and for outputting a proportional integral control signal corresponding to the calculated phase angle, such that the motor can be controlled to operate at a constant speed; and
an input power control means (620) for controlling input power to the washing machine motor under the control of the microprocessor means (600).

2. The device as claimed in claim 1, wherein the wave rectification means (610) includes
a first amplification means (611) for receiving signals from the current detection means (650) as inverted and non-inverted inputs respectively, and
a second amplification means (612) for receiving signal from the first amplification means (611) as an inverted input.

## Patentansprüche

1. Vorrichtung zum Steuern einer Geschwindigkeit eines Waschmaschinenmotors, wobei der Motor derart ausgebildet ist, dass bei einer Motoreingangsspannung V1 und Strom I1 die Motorgeschwindigkeit N1 beträgt, bei einer Motoreingangsspannung V2 und Strom I2 die Motorgeschwindigkeit N2 beträgt, und bei einer Motoreingangsspannung V3 und Strom I3, die Motorgeschwindigkeit N3 beträgt, wobei der Motor Geschwindigkeit-Drehmoment (S-T) Kennkurven aufweist, die den Anforderungen N1 < N2 < N3 und I1 < I2 < I3 genügen, wenn V1 < V2 < V3, wobei die Vorrichtung umfasst:
Geschwindigkeitserfassungsmittel (630) zum Erfassen einer Anzahl von Umdrehungen des Waschmaschinenmotors (640);
Stromerfassungsmittel (650) zum Erfassen des Stroms, der durch den Waschmaschinenmotor (640) fließt;
Wellengleichrichtungsmittel (610) zum Gleichrichten des Stroms in Gleichstrom, der von dem Stromerfassungsmittel (650) empfangen wird;
Mikroprozessormittel (600) zum Berechnen eines Phasenwinkels (θ) unter Verwendung des Gleichstroms, der von dem Wellengleichrichtungsmittel (610) empfangen wird, und zum Ausgeben eines proportionalen Integralsteuerungssignals, das dem berechneten Phasenwinkel entspricht, so dass der Motor für einen Betrieb bei einer konstanten Geschwindigkeit gesteuert werden kann; und
ein Eingangsleistungssteuerungsmittel (620) zum Steuern der Eingangsleistung des Waschmaschinenmotors unter der Steuerung durch das Mikroprozessormittel (600).

2. Vorrichtung nach Anspruch 1, wobei das Wellengleichrichtungsmittel (610) ein erstes Verstärkermittel (611) zum Empfangen von Signalen von dem Stromerfassungsmittel (650) als invertierte bzw. nicht-invertierte Eingaben aufweist, und ein zweites Verstärkermittel (612) zum Empfangen vom Signal von dem ersten Verstärkermittel (611) als eine invertierte Eingabe.

## Revendications

1. Un dispositif pour commander la vitesse du moteur d'une machine à laver, le moteur étant tel que pour une tension d'entrée V1 et un courant d'entrée I1 du moteur, la vitesse du moteur est N1, pour une tension d'entrée V2 et un courant d'entrée I2 du moteur, la vitesse du moteur est N2, et pour une tension d'entrée V3 et un courant d'entrée I3 du moteur, la vitesse du moteur est N3, le moteur présentant des courbes caractéristiques vitesse-couple (S-T) satisfaisant les conditions N1<N2<N3 et I1<I2<I3 lorsque V1<V2<V3, le dispositif comprenant :
- des moyens de détection de vitesse (630) pour mesurer le nombre de tours du moteur (640) de machine à laver ;
- des moyens de mesure de courant (650) pour mesurer le courant s'écoulant dans le moteur de machine à laver (640) ;
- des moyens de redressement d'onde (610) pour redresser le courant reçu des moyens de détection de courant (650) pour le transformer en courant continu ;
- des moyens de microprocesseur (600) pour calculer un angle de phase (θ) en utilisant le courant continu reçu des moyens de redressement d'onde (610) et pour fournir en sortie un signal de commande du type proportionnel intégral correspondant à l'angle de phase calculé, de sorte que le moteur puisse être commandé pour fonctionner à une vitesse constante ; et
- des moyens de contrôle de la puissance d'entrée (620) pour contrôler la puissance d'entrée du moteur de la machine à laver sous le contrôle des moyens de microprocesseur (600).

2. Le dispositif selon la revendication 1, dans lequel les moyens de redressement d'onde (610) comprennent :
- des premiers moyens d'amplification (611) pour recevoir des signaux venant des moyens de mesure de courant (650) en tant, respectivement, que signal d'entrées inversé et non-inversé, et
- des seconds moyens d'amplification (612) pour recevoir un signal des premiers moyens d'amplification (611) en tant que signal d'entrée inversé.
